# EUROPEAN PATENT APPLICATION

(11) **EP 3 067 636 A1**
(43) Date of publication of application: **14.09.2016**
(21) Application number: 14871838.0
(22) Date of filing: 09.12.2014
(51) Int. Cl.: F24F 11/02, F25B 1/00

(54) **DEVICE FOR CONTROLLING AIR-CONDITIONING DEVICE AND METHOD FOR CONTROLLING AIR-CONDITIONING DEVICE**

(30) Priority: 20.12.2013 JP 2013264308
(71) Applicant: MITSUBISHI HEAVY INDUSTRIES, Ltd., Tokyo 108-8215 (JP)
(72) Inventor: HAMACHIYO, Takashi, Tokyo 108-8215 (JP); KATO, Takahiro, Tokyo 108-8215 (JP); MITOMA, Keisuke, Tokyo 108-8215 (JP)
(74) Representative: Intès, Didier Gérard André
(86) International application number: PCT/JP2014/082493
(87) International publication number: WO 2015/093341

(57) **Abstract**

An air conditioner control device equipped with: a storage unit that stores a limiting value of a rotational speed of a compressor in accordance with an indoor unit operating capacity; and a compressor control unit that controls the rotational speed of the compressor in accordance with the indoor unit operating capacity, with the limiting value of the rotational speed as an upper limit value. The limiting value of the rotational speed is defined so as to increase in accordance with an increase in the operating capacity, so that when the indoor unit operating capacity is at a maximum, the rotational speed of the compressor reaches a predetermined maximum rotational speed. Thus, the air conditioner control device can reduce the peak power consumption without compromising the comfort of a room.

## Description

### Technical Field

The present invention relates to a device for controlling an air-conditioning device, and a method for controlling an air-conditioning device.

### Background Art

As the demand for greater energy efficiency increases, there is a demand for air-conditioning devices that operate with reduced power consumption. In this case, there is a possibility that the comfort of the users of air-conditioning devices will be compromised.

Therefore, Patent Document 1 discloses an air conditioner in which the capacity of a variable capacity compressor is controlled every predetermined period, and the capacity of the compressor is controlled with an arithmetic expression for the compressor capacity derived on the basis of an indoor heat exchanger capacity setting value, in order to both improve comfort and achieve energy efficiency. In this way, the compressor frequency is controlled in accordance with the heat exchanger capacity setting value that depends on differences in the form of the indoor unit or the like, enabling optimum compressor operation in accordance with the indoor demand load.

Also, in order to reduce the peak power consumed by the air-conditioning device, demand control is carried out by providing an upper limit value of the rotational speed of the compressor.

### Citation List

### Patent Literature

Patent Literature 1: Japanese Patent No. 4043255B

### Summary of Invention

### Technical Problem

However, in demand control, even if the air-conditioning device is operated at low capacity operation so that the rotational speed of the compressor is not high, the peak power consumption is not reduced.

This is because in low capacity operation, the rotational speed of the compressor is increased to its capacity or higher, with the objective of satisfying the demand value of the indoor temperature for a short period of time. As a result, for example, the rotational speed of the compressor is increased for a short period of time up to the upper limit value for demand control. Then, when the demand value of the indoor temperature is satisfied, the rotational speed of the compressor is reduced in accordance with the capacity.

When such control is carried out, there is a peak in the power consumption, even though demand control is carried out.

On the other hand, when a large capacity operation in demand control is carried out in which the rotational speed of the compressor is increased, the rotational speed of the compressor does not rise higher than the set upper limit value. In this case, the air-conditioning device will have insufficient capacity with respect to the demand, and there is a possibility that the indoor comfort will be compromised.

In light of the foregoing, an object of the present invention is to provide a device for controlling an air-conditioning device and a method for controlling an air-conditioning device that enable the peak power to be reduced without compromising the interior comfort.

### Solution to Problem

In order to solve the above problem, the device for controlling an air-conditioning device and the method for controlling an air-conditioning device according to the present invention adopt the following means.

A device for controlling an air-conditioning device according to a first aspect of the present invention is a device for controlling an air-conditioning device including one or a plurality of indoor units. The device for controlling an air-conditioning device includes storage means for storing a limiting value of a rotational speed of a compressor in accordance with an operating capacity of the operating indoor unit; and compressor control means for controlling the rotational speed of the compressor in accordance with the operating capacity, the limiting value of the rotational speed stored in the storage means being an upper limiting value. In the device for controlling an air-conditioning device, the limiting value increases in accordance with an increase in the operating capacity so that when the operating capacity is at the maximum, the rotational speed of the compressor reaches a maximum rotational speed.

The air-conditioning device according to this configuration includes one or a plurality of indoor units. The operating capacity of the operating indoor unit increases as the number of operating indoor units increases.

The limiting value of the rotational speed of the compressor is stored in the storage unit in accordance with the operating capacity of the operating indoor unit. The limiting value increases in accordance with an increase in the operating capacity, so that when the operating capacity of the indoor unit is at the maximum, the compressor rotational speed reaches the maximum rotational speed. Note that the maximum rotational speed is the rotational speed at which the maximum performance of the compressor is exhibited.

The compressor control means controls the rotational speed of the compressor in accordance with the operating capacity of the indoor unit, with the limiting value stored in the storage means as the upper limiting value of the rotational speed.

In this way, the rotational speed of the compressor is controlled in accordance with the operating capacity, even when the operating capacity of the indoor unit is low. Therefore, when the operating capacity of the indoor unit is low, the rotational speed of the compressor is prevented from excessively rising, thereby causing the air-conditioning device to operate with reduced peak power. On the other hand, when the operating capacity of the indoor unit is at the maximum, there is no limit provided for the rotational speed of the compressor, thereby allowing the air-conditioning device to operate with more emphasis on the indoor comfort. The limiting value may increase linearly in accordance with the operating capacity of the indoor unit, or it may increase non-linearly.

Therefore, this configuration can reduce the peak power consumption without compromising the indoor comfort.

In the first aspect as described above, preferably the storage means stores a plurality of limiting values that vary in accordance with the operating capacity.

According to this configuration, different limiting values can be set in accordance with the operating capacity, so the control can emphasize either reduction in peak power or the indoor comfort.

In the first aspect as described above, preferably the limiting value is a certain value lower than the maximum rotational speed when the operating capacity is equal to or greater than a predetermined value.

According to this configuration, the rise in the peak power consumption can be limited.

The method for controlling an air-conditioning device according to a second aspect of the present invention is a method for controlling an air-conditioning device including one or a plurality of indoor units, in which a rotational speed of a compressor is limited in accordance with an operating capacity of the operating indoor unit. The method includes a first step of reading the limiting value from storage means; and a second step of controlling the rotational speed of the compressor in accordance with the operating capacity, the read limiting value of the rotational speed being an upper limiting value. In the method, the limiting value is defined so as to increase in accordance with an increase in the operating capacity, so that when the operating capacity is at the maximum, the rotational speed of the compressor reaches a predetermined maximum rotational speed.

### Advantageous Effect of Invention

According to the present invention, an excellent effect that the peak power consumption can be reduced without compromising the indoor comfort is exhibited.

### Brief Description of Drawings

FIG. 1 is a block diagram illustrating the configuration of an air-conditioning device according to a first embodiment of the present invention.
FIG. 2 is a function block diagram illustrating the electrical configuration of the air-conditioning device according to the first embodiment of the present invention.
FIG. 3 is a graph showing the relationship between the indoor unit operating capacity and the limiting value of the rotational speed according to the first embodiment of the present invention.
FIG. 4 is a flowchart depicting the process flow of compressor control processing according to the first embodiment of the present invention.
FIG. 5 is a graph showing the relationship between the operating capacity of the indoor unit and the limiting value of the rotational speed according to a second embodiment of the present invention.

### Description of Embodiments

Embodiments of the device for controlling an air-conditioning device and the method for controlling an air-conditioning device according to the present invention are described below with reference to the accompanying drawings.

### [First Embodiment]

Hereinafter, a first embodiment of the present invention will be described.

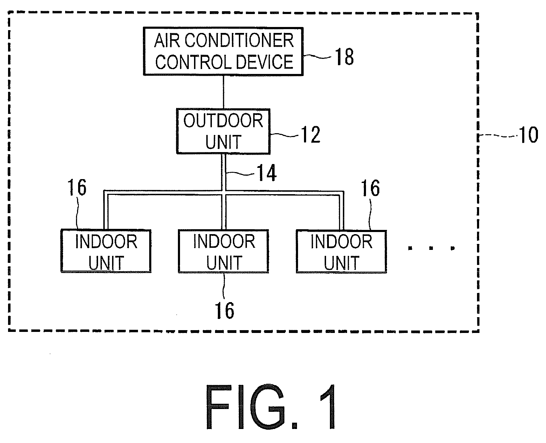

FIG. 1 is a block diagram illustrating the configuration of an air-conditioning device 10 according to the first embodiment.

The air-conditioning device 10 includes one outdoor unit 12, a plurality of indoor units 16 connected to the outdoor unit 12 via refrigerant piping 14, and an air conditioner control device 18 that controls the outdoor unit 12 and the indoor units 16. Note that the number of indoor units 16 illustrated in FIG. 1 is an example, and the number of indoor units 16 connected to the outdoor unit 12 may be four or more. Also, the respective operating capacities of the indoor units 16 may be the same, or may be different from each other.

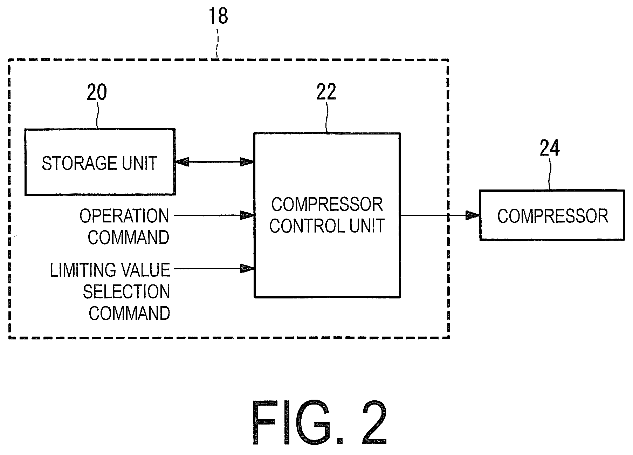

FIG. 2 is a function block diagram illustrating the electrical configuration of the air conditioner control device 18. Note that FIG. 2 illustrates the function of controlling a compressor 24 included in the air-conditioning device 10.

The air conditioner control device 18 includes a central processing unit (CPU), a random access memory (RAM), a computer readable recording medium (storage unit 20) such as a read only memory (ROM), and the like. Also, a sequence of processing for performing the various functions is stored on a recording medium or the like in the form of a program, and the various functions are performed by the CPU loading this program onto the RAM or the like and executing information processing or calculation processing. Note that the program may be preinstalled in the ROM or other recording medium, may be provided in the form of being stored in a computer readable recording medium, or may be distributed through wired/wireless communication means. Examples of the computer readable regarding medium include a magnetic disk, a magneto-optical disk, a CD-ROM, a DVD-ROM, a semiconductor memory, and the like.

The air conditioner control device 18 includes the storage unit 20 and a compressor control unit 22.

The storage unit 20 stores a limiting value of the rotational speed of the compressor 24 in accordance with the operating capacity of the operating indoor unit 16 (hereafter referred to as the "indoor unit operating capacity"). The indoor unit operating capacity increases as the number of operating indoor units 16 increases. In other words, the sum of the operating capacities of the operating indoor units 16 is the indoor unit operating capacity.

Table 1 shows an example of the relationship between the operating capacity of each indoor unit 16 and the indoor unit operating capacity according to the first embodiment.

**[Table 1]**

| Indoor unit A (Operating capacity 5 kW) | Indoor unit B (Operating capacity 5 kW) | Indoor unit C (Operating capacity 10 kW) | Indoor unit operating capacity (%) |
|---|---|---|---|
| ON | ON | ON | 100 |
| OFF | OFF | ON | 50 |
| ON | OFF | OFF | 25 |
| OFF | ON | ON | 75 |

As an example, the operating capacities of an indoor unit 16A, an indoor unit 16B, and an indoor unit 16C are 5 kW, 5 kW, and 10 kW, respectively.

When the indoor units 16A, 16B, and 16C are all operating, the indoor unit operating capacity is 100%. When the indoor units 16A, 16B, are not operating and the indoor unit 16C is operating, the indoor unit operating capacity is 50%. When the indoor unit 16A is operating and the indoor units 16B, 16C are operating, the indoor unit operating capacity is 25%. When the indoor unit 16A is not operating and the indoor units 16B, 16C are operating, the indoor unit operating capacity is 75%.

In the following description, the rotational speed of the compressor 24 is referred to as the compressor rotational speed, and the limiting value of the rotational speed of the compressor 24 is referred to as the limiting value of the rotational speed.

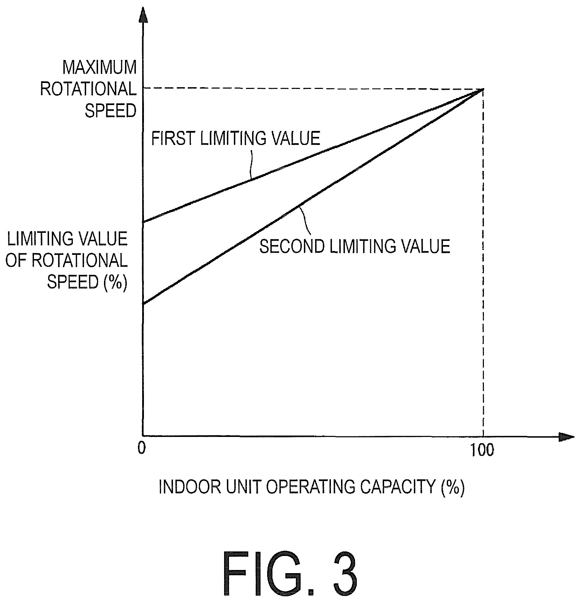

FIG. 3 is a graph showing the relationship between the indoor unit operating capacity and the limiting value of the rotational speed according to the first embodiment. In FIG. 3, when the indoor unit operating capacity is at the maximum, as an example it is indicated as 100%, but this is not a limitation, and the indoor unit operating capacity may be expressed as an actual value, such as kW or the like. Also the limiting value of the rotational speed is expressed as a percentage (%) with the maximum rotational speed of the compressor 24 as 100, but this is not a limitation, and the limiting value of the rotational speed may be expressed as an actual value, such as rps or the like.

The limiting value of the rotational speed is determined so as to rise in accordance with an increase in the indoor unit operating capacity, so that when the indoor unit operating capacity is at the maximum, the compressor rotational speed reaches the maximum rotational speed. The maximum rotational speed is the rotational speed at which the maximum performance of the compressor 24 is exhibited, in other words, the design maximum rotational speed of the compressor 24.

The storage unit 20 stores a plurality of limiting values of the rotational speed that vary in accordance with the indoor unit operating capacity. In the example in FIG. 3, a first limiting value and a second limiting value are stored. The second limiting value of the rotational speed is lower than the first limiting value.

Note that even when the indoor unit operating capacity is 0%, it is necessary to rotate the compressor 24, so the first limiting value and the second limiting value do not decrease to 0%. When the indoor unit operating capacity is 0%, the first limiting value is, for example, 60%, and the second limiting value is lower than the first limiting value, for example 40%. The value of the second limiting value (40%) is, for example, the minimum rotational speed of the compressor 24.

The limiting value of the rotational speed may increase linearly in accordance with the indoor unit operating capacity as illustrated in FIG. 3, or it may increase non-linearly.

An operation command is input to the compressor control unit 22. The operation command includes information indicating the indoor unit operating capacity. The compressor control unit 22 controls the rotational speed of the compressor 24 in accordance with the indoor unit operating capacity, with the limiting value of the rotational speed stored in the storage unit 20 as the upper limiting value of the rotational speed.

Also, a limiting value selection command is input to the compressor control unit 22. The limiting value selection command is a command value for selecting the first limiting value or the second limiting value, which is selected by, for example, the operator of the air-conditioning device 10.

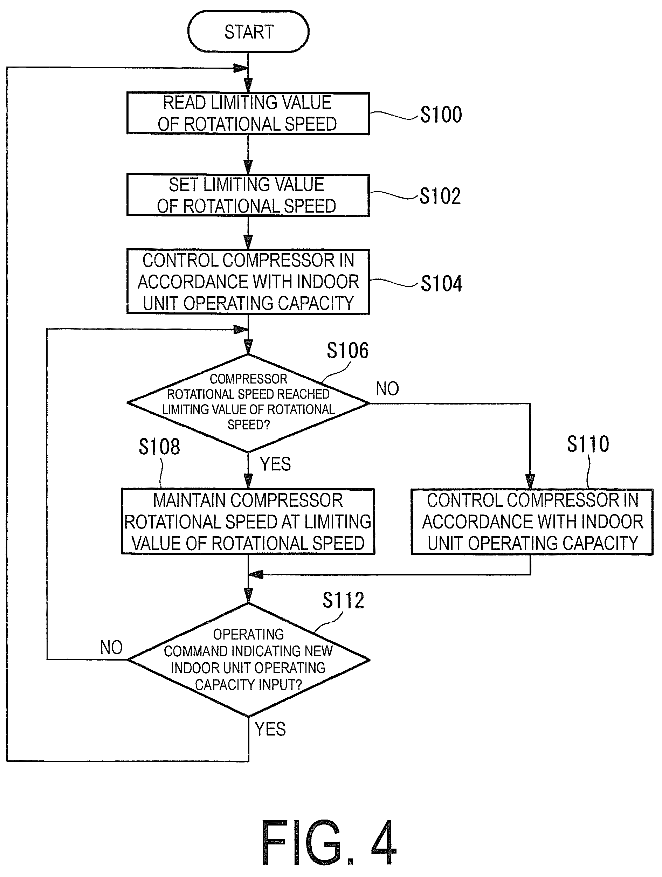

FIG. 4 is a flowchart depicting the compressor control process according to the first embodiment. The compressor control process is a process for controlling the rotational speed of the compressor 24, executed by the compressor control unit 22, and a program for this process is stored in the storage unit 20.

The compressor control process starts upon the operation command being input to the compressor control unit 22, and terminates upon the operation command that indicates stop of the air-conditioning device 10 being input.

First, in step 100, the limiting value of the rotational speed is read from the storage unit 20 in accordance with the indoor unit operating capacity indicated by the input operating command.

Note that whether the read limiting value of the rotational speed is the first limiting value or the second limiting value is preselected in accordance with the limiting value selection command.

Next in step 102, the read limiting value of the rotational speed is set as the upper limiting value of the rotational speed of the compressor 24.

Next in step 104, the rotational speed of the compressor 24 is controlled in accordance with the indoor unit operating capacity.

In the next step 106, whether or not the compressor rotational speed has reached the set limiting value of the rotational speed is determined. If the result of the determination is YES, the control proceeds to step 108. If the result is NO, the control proceeds to step 110.

In step 108, the compressor rotational speed is maintained at the set limiting value of the rotational speed, and the control proceeds to step 112.

In step 110, the rotational speed of the compressor 24 continues to be controlled in accordance with the indoor unit operating capacity, and the control proceeds to step 112.

In step 112, whether or not an operating command indicating a new indoor unit operating capacity has been input to the compressor control unit 22 is determined. If the result of the determination is YES, the control returns to step 100, and the limiting value of the rotational speed is read from the storage unit 20 in accordance with the new indoor unit operating capacity. If the result is NO, the control returns to step 106, and the rotational speed continues to be controlled with the set limiting value of the rotational speed as the upper limiting value.

In this way, when the indoor unit operating capacity is less than the maximum (less than 100%), a limit is provided for the compressor rotational speed, so the peak power consumption can be reduced. In other words, the compressor rotational speed is controlled in accordance with the operating capacity, even when the operating capacity of the indoor units 16 is low.

Therefore, even when the operating capacity of the indoor units 16 is low, the air conditioner control device 18 according to the first embodiment is configured to operate with reduced peak power consumption by preventing the compressor rotational speed from rising excessively. On the other hand, when the indoor unit operating capacity is at the maximum (100%), there is no limit provided for the compressor rotational speed, allowing the air-conditioning device 10 to operate with more emphasis on the indoor comfort.

Note that when the indoor units 16 are operating, the first limiting value and the second limiting value of the limiting value of the rotational speed can be changed by the operator.

For example, in the state in which the first limiting value is set, in order to increase the effect of occurrence of peak power consumption, the limiting value selection command is input to the compressor control unit 22 to select the second limiting value as the limiting value of the rotational speed. On the other hand, in the state in which the second limiting value is set, in order to improve the indoor comfort, the limiting value selection command is input to the compressor control unit 22 to select the first limiting value as the limiting value of the rotational speed. In other words, the first limiting value is a limiting value that improves the comfort compared with the second limiting value. The second limiting value is a limiting value that improves the effect of limiting the occurrence of peak power consumption compared with the first limiting value.

In this way, the air conditioner control device 18 can carry out control with emphasis on either reduction in peak power consumption or indoor comfort, by using a plurality of different limiting values of the rotational speed.

As described above, the air conditioner control device 18 according to the first embodiment includes the storage unit 20 that stores limiting values of the rotational speed of the compressor 24 in accordance with the indoor unit operating capacity; and the compressor control unit 22 that controls the rotational speed of the compressor 24 in accordance with the indoor unit operating capacity, with the limiting values of the rotational speed stored in the storage unit 20 as the upper limiting values. The limiting value of the rotational speed is determined so as to rise in accordance with the increase in the indoor unit operating capacity, so that when the indoor unit operating capacity is at the maximum, the compressor rotational speed reaches a predetermined maximum rotational speed.

Therefore, the air conditioner control device 18 according to the present embodiment can reduce the peak power consumption without compromising the indoor comfort.

### [Second Embodiment]

Hereinafter, a second embodiment of the present invention will be described.

Note that the configuration of the air-conditioning device 10 and the air conditioner control device 18 according to the second embodiment is the same as the configuration of the air-conditioning device 10 and the air conditioner control device 18 according to the first embodiment, so the explanation thereof is omitted.

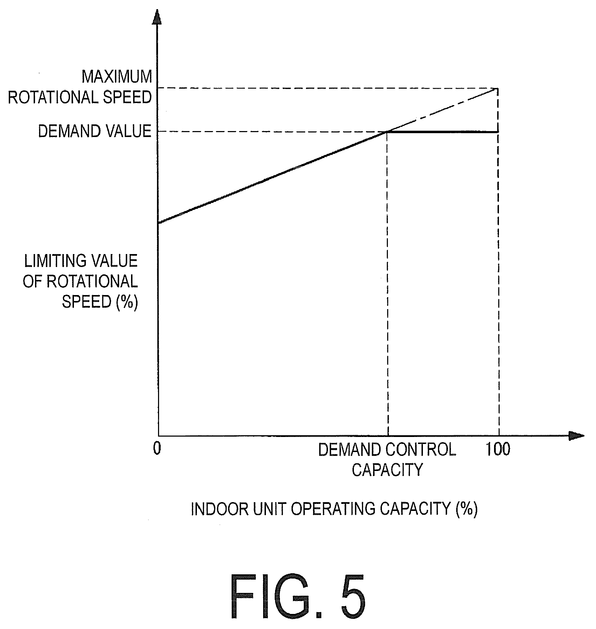

FIG. 5 is a graph showing the relationship between the indoor unit operating capacity and the limiting value of the rotational speed according to the second embodiment.

The limiting value of the rotational speed according to the second embodiment is a certain value less than the maximum rotational speed (hereafter referred to as the "demand value") when the indoor unit operating capacity is equal to or greater than a predetermined value (hereafter referred to as the "demand control capacity").

The demand value is, for example, 80% of the maximum rotational speed, and is preset in accordance with the permissible value of the electrical power consumption of the compressor 24.

In other words, when the indoor unit operating capacity is equal to or greater than that at which the compressor rotational speed exceeds the demand value, the compressor rotational speed is constant at the demand value.

In this way, the compressor 24 is not operated at the maximum rotational speed at which the power consumption is large, so the increase in peak power consumption is more limited.

In the above, the present invention has been described using the aforementioned embodiments; however, the technical scope of the present invention is not limited to the scope described in the aforementioned embodiments. Various modifications or improvements can be added to the aforementioned embodiments without deviating from the gist of the invention, and aspects obtained by adding the modifications or improvements are also included within the technical scope of the present invention. Also, the first embodiment and the second embodiment may be combined as appropriate.

For example, in the embodiments as described above, the configurations have been described in which the limiting value of the rotational speed is defined in accordance with the relationship with the indoor unit operating capacity as shown in FIGS. 3 and 5. However, the present invention is not limited to this, and the limiting value of the rotational speed may be defined by a relationship with the number of operating indoor units 16. In other words, the horizontal axis in FIGS. 3 and 5 may be the number of operating indoor units 16. Preferably this form is applied when the operating capacity of each of the indoor units 16 is the same.

Also, in the embodiments as described above, the configurations have been described in which a plurality of indoor units 16 are provided. However, the present invention is not limited to this, and the number of indoor units 16 may be one. In this case, the indoor unit operating capacity is the operating load for the one indoor unit 16.

Furthermore, the flow of the compressor control process described in the aforementioned embodiments is also an example, and an unnecessary step may be deleted, a new step may be added, and the processing order may be changed without deviating from the gist of the present invention.

### Reference Signs List

- 10: Air-conditioning device
- 12: Outdoor unit
- 16: Indoor unit
- 18: Air conditioner control device
- 20: Storage unit
- 22: Compressor control unit
- 24: Compressor

## Claims

1. A device for controlling an air-conditioning device including one or a plurality of indoor units, the device comprising:
storage means for storing a limiting value of a rotational speed of a compressor in accordance with an operating capacity of the operating indoor unit; and compressor control means for controlling the rotational speed of the compressor in accordance with the operating capacity, the limiting value of the rotational speed stored in the storage means being an upper limiting value, wherein
the limiting value increases in accordance with an increase in the operating capacity so that when the operating capacity is at a maximum, the rotational speed of the compressor reaches a maximum rotational speed.

2. The device for controlling an air-conditioning device according to claim 1, wherein
the storage means stores a plurality of the limiting values that vary in accordance with the operating capacity.

3. The device for controlling an air-conditioning device according to claim 1 or 2, wherein
the limiting value is a certain value lower than the maximum rotational speed when the operating capacity is equal to or greater than a predetermined value.

4. A method for controlling an air-conditioning device including one or a plurality of indoor units, in which a rotational speed of a compressor is limited in accordance with an operating capacity of the operating indoor unit, the method comprising:
a first step of reading a limiting value from storage means; and
a second step of controlling the rotational speed of the compressor in accordance with the operating capacity, the read limiting value of the rotational speed being an upper limiting value, wherein
the limiting value is defined so as to increase in accordance with an increase in the operating capacity, so that when the operating capacity is at a maximum, the rotational speed of the compressor reaches a predetermined maximum rotational speed.
